# EUROPÄISCHE PATENTSCHRIFT

(11) **EP 2 374 601 B1**
(45) Veröffentlichungstag und Bekanntmachung des Hinweises auf die Patenterteilung: **18.09.2013**
(21) Anmeldenummer: 10159654.2
(22) Anmeldetag: 12.04.2010
(51) Int. Cl.: B29C 47/76, B29C 47/70, B29B 7/84, B29C 47/40, B29C 47/68

(54) **Mehrwellen-Schneckenmaschine mit integrierter Seiherplatte zur Entgasung von Polymerschmelzen**
Multiple screw machine with integrated strainer for degasing polymer melts
Machine à vis multiples avec filtre intégré pour dégazage de polymères fondus

(43) Veröffentlichungstag der Anmeldung: 12.10.2011
(73) Patentinhaber: Coperion GmbH, 70469 Stuttgart (DE)
(72) Erfinder: Conrad, Dr. Ulrich, 31008 Elze (DE); Schofer, Jochen, 70439 Stuttgart (DE); Lechner, Frank, 76131 Karlsruhe (DE)
(74) Vertreter: Rau, Albrecht

(56) Entgegenhaltungen:
- WO-A1-2005/087477
- DE-A1- 3 431 063
- DE-A1-102006 027 216
- DE-C- 623 903
- GB-A- 1 081 029
- JP-A- 59 048 136
- JP-A- 2000 318 017
- US-A- 3 407 438
- US-A- 3 501 807

## Beschreibung

Die Erfindung betrifft eine Mehrwellen-Schneckenmaschine zur Entgasung von Polymerschmelzen gemäß dem Oberbegriff des Anspruchs 1.

Das Entgasen von Polymerschmelzen zur Verbesserung der Polymerqualität ist bei der industriellen Herstellung von Kunststoffen üblich. Aus den Polymerschmelzen werden flüchtige Bestandteile, wie Monomere, Oligomere, für die Polymerisation erforderliche Hilfsmittel sowie unerwünschte Nebenprodukte entgast, die die Polymerqualität beeinträchtigen. Typische Hilfsmittel sind beispielsweise Lösungsmittel oder Suspensionsmittel. Durch das Entgasen können insbesondere die mechanischen und optischen Eigenschaften verbessert werden.

Aus der EP 0 861 717 A1 (entspr. US 6,024,479 A) ist eine Extrusionsvorrichtung zur Verarbeitung stark ausgasender Polymerschmelzen bekannt. Die Extrusionsvorrichtung weist einen Hauptextruder sowie zwei seitlich in diesen mündende Nebenextruder auf, sodass der in einer Verdampfungszone des Hauptextruders entstehende Gasstrom in mindestens drei Teilströme aufgeteilt wird, die dann aus den Extrudern abgeführt werden. Nachteilig bei dieser Extrusionsvorrichtung ist, dass der technische Auf wand aufgrund der erforderlichen Anzahl an Schneckenmaschinen bzw. Extrudern hoch ist.

Aus der JP 59 048136 A ist eine Mehrwellen-Schneckenmaschine zur Entgasung von Polymerschmelzen bekannt, bei der mehrere Entgasungsvorrichtungen mit zugehörigen Entgasungseinheiten in der Förderrichtung nacheinander angeordnet sind. Die Entgasungseinheiten sind als zweiteilige Platten ausgebildet, durch die die Schneckenwellen geführt sind. Die Platten weisen jeweils mehrere Bohrungen auf, durch die mittels der Schneckenwellen die Polymerschmelze geführt und hierbei entgast wird.

Aus der DE 34 31 063 A1 ist eine Vorrichtung zur Entgasung von Kunststoffen in Extrudern bekannt. Die Vorrichtung weist eine Platte auf, die aus zwei Hälften zusammengesetzt ist, die eine Durchgangsöffnung für den zylindrischen Teil einer Schneckenwelle bilden. Die obere Hälfte der Platte weist eine Vertiefung auf, von der aus sich mehrere Löcher durch die Platte erstrecken. Der zu entgasende Kunststoff wird mittels der Schneckenwelle durch die Löcher geführt.

Aus der US 3 501 807 A und der US 3 407 438 A sind Schnecken-Strangpressen bekannt, die eine Lochscheibe und eine nachgeordnete Schneidvorrichtung aufweisen.

Aus der JP 2000 318017 A ist eine Mehrwellen-Schneckenmaschine bekannt, die zur Dehydratation und Entgasung von thermoplatischen Schmelzen eine Dehydratationszone und eine nachgeordnete Entgasungszone auf weist. Die Entgasungszone weist zwei Knet- und Entgasungsabschnitte auf, die jeweils durch einen Knetabschnitt und einen nachgeordneten Entgasungsabschnitt mit einer zugehörigen Entgasungsöffnung gebildet werden.

Aus der GB 1 081 029 A ist eine Schneckenpresse mit einem veränderlichen Stauabschnitt bekannt. Der Stauabschnitt ist durch eine ringförmige Nut und Schneckenelemente gebildet, die im Vergleich zu anderen Abschnitten der Schnecke eine gegenläufige Steigung aufweisen.

Der Erfindung liegt die Aufgabe zugrunde, eine Mehrwellen-Schneckenmaschine zur Entgasung von Polymerschmelzen zu schaffen, bei der mit einem einfachen Aufbau eine gegenüber dem Stand der Technik höhere Entgasungsleistung erzielt wird.

Diese Aufgabe wird durch eine Mehrwellen-Schneckenmaschine mit den Merkmalen des Anspruchs 1 gelöst. Erfindungsgemäß wurde erkannt, dass mit einem geringen Aufwand eine hohe Entgasungsleistung erzielbar ist, wenn der Materialstrom bzw. Polymerschmelzestrom im Verfahrensteil der Mehrwellen-Schneckenmaschine in mehrere kleinere Materialströme bzw. Polymerschmelzeströme aufgeteilt wird, da hierdurch das Verhältnis von Oberfläche zu Volumen der Polymerschmelze stark vergrößert wird und flüchtige Bestandteile aus der Polymerschmelze leicht austreten können. Die Aufteilung des Materialstroms erfolgt mittels mehreren Entgasungseinheiten, die sich ausgehend von dem Gehäuse bis zu den Wellen in den Gehäusebohrungen erstrecken, sodass die Polymerschmelze aufgrund der Zwangsförderung der Mehrwellen-Schneckenmaschine in der Förderrichtung an der jeweiligen Entgasungseinheit vorbei bzw. durch diese hindurch gefördert wird. Da die Entgasungseinheiten derart ausgebildet sind, dass der Materialstrom vor der jeweiligen Entgasungseinheit beim Vorbeiführen an dieser bzw. beim Durchführen durch diese in mehrere kleinere Materialströme aufgeteilt wird, kommt es zu der gewünschten Vergrößerung der Oberfläche und dem Ausgasen von flüchtigen Bestandteilen. Dadurch, dass die Entgasungseinheiten unmittelbar in dem Verfahrensteil der Mehrwellen-Schneckenmaschine angeordnet sind, sind die Entgasungsvorrichtungen in die Mehrwellen-Schneckenmaschine integriert, sodass deren Aufbau einfach bleibt. Die erfindungsgemäße Mehrwellen-Schneckenmaschine ermöglicht eine Anpassung der Entgasungsleistung an die zu entgasende Polymerschmelze. Je nach Bedarf können mehrere ertindungsgemäße Entgasungsvorrichtungen in Förderrichtung hintereinander angeordnet werden.

Die Entgasungsvorrichtungen sind vorzugsweise gleichartig ausgebildet. Die Mehrwellen-Schneckenmaschine ist vorzugsweise als dichtkämmende, gleichläufige Zweiwellen-Schneckenmaschine ausgebildet.

Die erfindungsgemäße Mehrwellen-Schneckenmaschine gewährleistet, dass die Oberfläche der Polymerschmelze durch die scheibenförmigen Knetelemente vor der jeweiligen Entgasungseinheit ständig geändert wird und die durch die jeweilige Entgasungseinheit geförderte Polymerschmelze durch die nachgeordneten Schneckenelemente zügig abgeführt wird und sich nicht nach der Entgasungseinheit staut. Auf diese Weise wird nach der Entgasungseinheit ein ausreichender Freiraum für die aufgeteilten Materialströme geschaffen, sodass die flüchtigen Bestandteile wirkungsvoll ausdampfen können.

Durch die plattenförmige Ausbildung ist die jeweilige Entgasungseinheit einfach herstellbar und montierbar. Darüber hinaus ermöglicht die jeweilige Entgasungseinheit die Aufteilung des Materialstroms in eine Vielzahl kleinerer Materialströme und eine damit verbundene erhebliche Vergrößerung der Oberfläche des Materials bzw. der Polymerschmelze. Die jeweilige Entgasungseinheit ist als sogenannte Seiher-Platte mit einer Vielzahl von Schmelze-Durchgangsöffnungen ausgebildet, durch die die Polymerschmelze zwangsweise gefördert wird. Die Entgasungseinheit erstreckt sich im gesamten Bereich zwischen den Wellen und dem Gehäuse und gewährleistet somit, dass der Materialstrom ausschließlich in Materialströme aufgeteilt wird, die wesentlich kleiner sind. Da die mindestens zwei Wellen-Durchgangsöffnungen einen Durchmesser aufweisen, der nur geringfügig größer als der Durchmesser der Wellen ist, werden größere Materialströme im Bereich der Wellen vermieden. Hierdurch wird eine hohe Entgasungsleistung gewährleistet. Die Schmelze-Durchgangsöffnungen führen zu einer hohen Entgasungsleistung, also einem hohen Anteil an entgasten flüchtigen Bestandteilen. Durch Verwendung der Seiher-Platte wird der Materialstrom über den Kamm der Behandlungselemente und durch den Zwickelbereich reduziert und eine Zwangsförderung des Materials bzw. der Polymerschmelze durch die Schmelze-Durchgangsöffnungen bzw. die Seiher-Bohrungen der Seiher-Platte erzielt. Die jeweilige Entgasungsöffnung ist in einem der Gehäuseabschnitte integriert. Die jeweilige Entgasungseinheit selbst muss dementsprechend keine eigene Entgasungsöffnung aufweisen.

Mit der Mehrwellen-Schneckenmaschine können je nach Bedarf hohe, mittlere oder niedrige Anteile an flüchtigen bzw. niedermolekularen Bestandteilen, wie beispielsweise Monomere, Oligomere oder Lösungsmittel aus Polymerschmelzen entgast werden. Dies gilt insbesondere auch für hochviskose und/oder scherempfindliche Polymere bzw. Polymerschmelzen. Bei den Polymerschmelzen kann es sich um Polymerlösungen oder Polymersuspensionen handeln. Zu entgasende flüchtende Bestandteile sind beispielsweise Monomere, Oligomere, Hilfsmittel, insbesondere Suspensions- und Lösungsmittel sowie unerwünschte Neben- und Reaktionsprodukte. Die hohe Entgasungsleistung wird insbesondere auch beim Entgasen mit Schleppmitteln erzielt.

Eine Mehrwellen-Schneckenmaschine nach Anspruch 2 ist einfach aufgebaut und einfach montierbar, da die jeweilige Entgasungseinheit in einfacher Weise zwischen zwei Gehäuseabschnitten angeordnet bzw. befestigt wird.

Eine Mehrwellen-Schneckenmaschine nach Anspruch 4 gewährleistet ein einfaches Abführen der entgasten Bestandteile aus dem Gehäuse. Dadurch, dass die jeweilige Entgasungsvorrichtung als Vorwärts-Entgasung ausgebildet ist, können die flüchtigen Bestandteile nach dem Ausdampfen unmittelbar austreten und müssen nicht rückwärts die Entgasungseinheit durchströmen.

Eine Mehrwellen-Schneckenmaschine nach Anspruch 5 gewährleistet einen einfachen Aufbau. Die Anzahl, die Größe, die Form und/oder der Abstand der Schmelze-Durchgangsöffnungen kann bei den gleichartigen Entgasungsvorrichtungen variieren.

Eine Mehrwellen-Schneckenmaschine nach Anspruch 6 ermöglicht eine einfache Befestigung der jeweiligen Entgasungseinheit. Die als Seiher-Platte ausgebildete Entgasungseinheit ist über die Flansche der Gehäuseabschnitte unmittelbar mit diesen verbunden.

Eine Anordnung der jeweiligen Entgasungseinheit nach Anspruch 7 verhindert, dass sich die Mehrwellen-Schneckenmaschine in Richtung der Drehachsen verlängert. Aufgrund der Ausnehmung ist die Entgasungseinheit in einen Gehäuseabschnitt bzw. in zwei benachbarte Gehäuseabschnitte integriert. Hierdurch können die Gehäuseabschnitte in üblicher Weise miteinander verbunden werden, sodass in die Gehäuseabschnitte integrierte und in Richtung der Drehachsen verlaufende Bohrungen, beispielsweise zur Ausbildung von Kühlkanälen in üblicher Weise miteinander verbunden werden können. Vorzugsweise ist die Entgasungseinheit vollständig in der Ausnehmung eines Gehäuseabschnitts angeordnet, sodass von zwei benachbarten Gehäuseabschnitten nur einer eine Ausnehmung aufweisen muss. Vorzugsweise ist die Ausnehmung an einer stromaufwärtigen Seite des Gehäuseabschnitts ausgebildet, sodass der Materialstrom bzw. die Polymerschmelze die Entgasungseinheit in diesen Gehäuseabschnitt presst. Alternativ kann die Entgasungseinheit in zwei Ausnehmungen von zwei benachbarten Gehäuseabschnitten angeordnet sein.

Eine Entgasungseinheit nach Anspruch 8 ist einfach herstellbar.

Eine Entgasungseinheit nach Anspruch 9 ist einfach montierbar, da diese bei der Montage nicht über die gesamten Wellen geschoben werden muss. Vorzugsweise ist die jeweilige Entgasungseinheit hälftig geteilt, sodass die Wellen-Durchgangsöffnungen jeweils hälftig in den beiden Entgasungseinheit-Teilen angeordnet sind. Auf diese Weise können die Entgasungseinheit-Teile einfach durch Zusammensetzen an der gewünschten Stelle montiert werden. Die Entgasungseinheit-Teile dichten vorzugsweise gegeneinander ab, sodass an der Trennstelle der Entgasungseinheit kein Materialstrom entstehen kann. Die Entgasungseinheit-Teile können auf einfache Weise in radialer Richtung in das Verfahrensteil eingeschoben werden.

Eine Mehrwellen-Schneckenmaschine nach Anspruch 10 kann einfach auf die zu entgasende Polymerschmelze angepasst werden. Dadurch, dass die mehrteilige Entgasungseinheit in einem Rahmen zwischen zwei benachbarten Gehäuseabschnitten angeordnet ist, kann diese einfach und schnell ausgewechselt werden. Hierdurch können beispielsweise Entgasungseinheiten mit einer unterschiedlichen Anzahl und/oder unterschiedlichen Größe der Schmelze-Durchgangsöffnungen flexibel in der Mehrwellen-Schneckenaschine verwendet werden.

Weitere Merkmale, Vorteile und Einzelheiten der Erfindung ergeben sich aus der nachfolgenden Beschreibung mehrerer Ausführungsbeispiele. Es zeigen:
- Fig. 1: einen Axialschnitt durch eine Zweiwellen-Schnecken-maschine mit mehreren in Förderrichtung hintereinander angeordneten Entgasungsvorrichtungen gemäß einem ersten Ausführungsbeispiel,
- Fig. 2: eine vergrößerte Darstellung einer der Entgasungsvorrichtungen in Fig. 1,
- Fig. 3: eine Draufsicht auf die Entgasungsvorrichtung in Fig. 2,
- Fig. 4: eine Schnittdarstellung im Bereich der Entgasungsvorrichtung entlang der Schnittlinie IV-IV in Fig. 2,
- Fig. 5: eine vergrößerte Darstellung entsprechend Fig. 2 einer Entgasungsvorrichtung gemäß einem zweiten Ausführungsbeispiel,
- Fig. 6: eine Schnittdarstellung im Bereich der Entgasungsvorrichtung entlang der Schnittlinie VI-VI in Fig. 5,
- Fig. 7: eine vergrößerte Darstellung entsprechend Fig. 2 einer Entgasungsvorrichtung gemäß einem dritten Ausführungsbeispiel, und
- Fig. 8: eine Schnittdarstellung im Bereich der Entgasungsvorrichtung entlang der Schnittlinie VIII-VIII in Fig. 7.

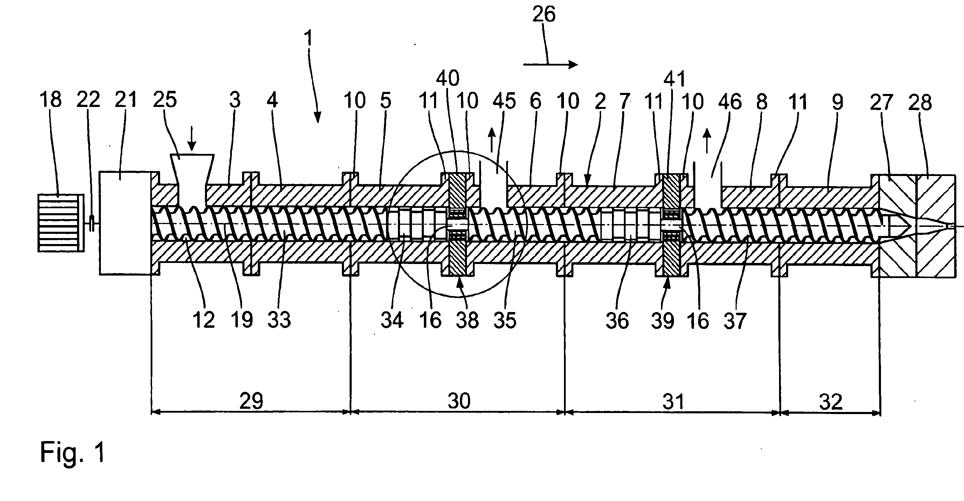

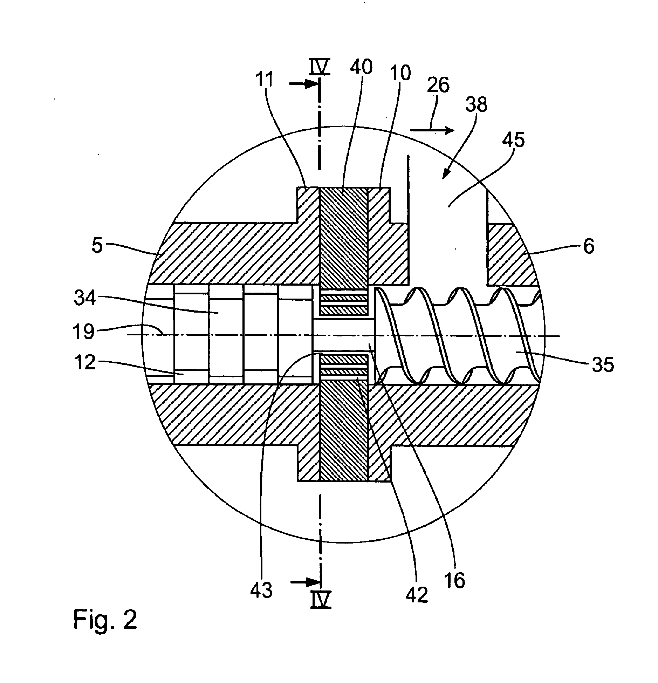

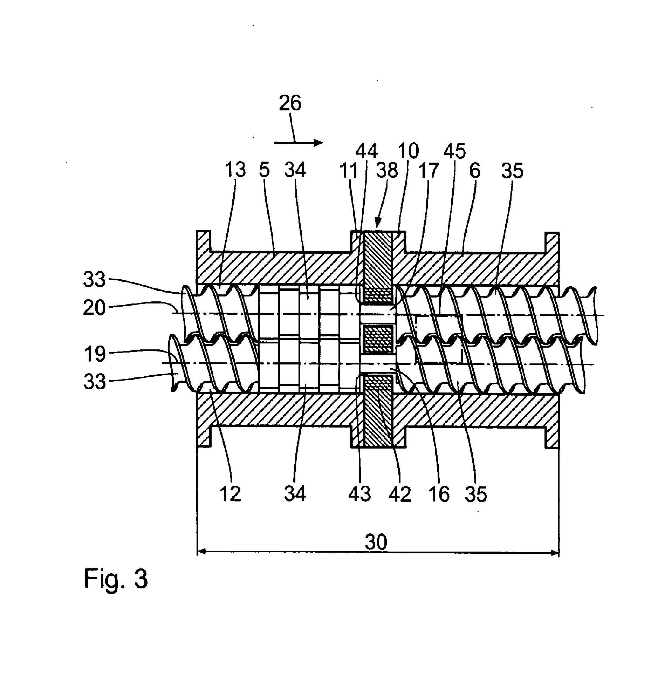

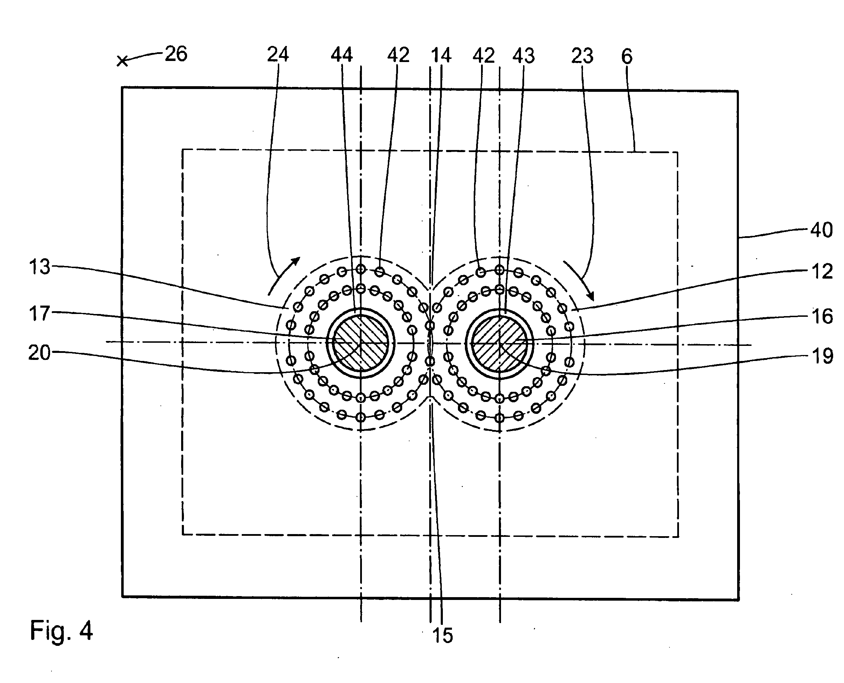

Nachfolgend wird unter Bezugnahme auf die Fig. 1 bis 4 ein erstes Ausführungsbeispiel der Erfindung beschrieben. Eine Zweiwellen-Schneckenmaschine 1 weist ein Gehäuse 2 aus mehreren hintereinander angeordneten und als Gehäuseschüsse bezeichneten Gehäuseabschnitten 3 bis 9 auf. Die Gehäuseabschnitte 3 bis 9 weisen an ihren Enden jeweils Flansche 10, 11 auf, über die die Gehäuseabschnitte 3 bis 9 zu dem Gehäuse 2 miteinander verbunden sind.

Im Gehäuse 2 sind zwei zueinander parallele und einander durchdringende Gehäusebohrungen 12, 13 ausgebildet, die im Querschnitt die Form einer liegenden Acht haben. Im Durchdringungsbereich der Gehäusebohrungen 12, 13 weisen die Gehäuseabschnitte 3 bis 9 sogenannte Zwickel 14, 15 auf.

In den Gehäusebohrungen 12, 13 sind konzentrisch zwei Wellen 16, 17 angeordnet, die von einem Antriebsmotor 18 um zugehörige Drehachsen 19, 20 drehantreibbar sind. Zwischen den Wellen 16, 17 und dem Antriebsmotor 18 ist ein Verzweigungsgetriebe 21 angeordnet, wobei wiederum zwischen dem Antriebsmotor 18 und dem Verzweigungsgetriebe 21 eine Kupplung 22 angeordnet ist. Die Wellen 16, 17 werden gleichsinnig, also in gleichen Drehrichtungen 23, 24 um die Drehachsen 19, 20 angetrieben.

Auf dem dem Verzweigungsgetriebe 21 benachbarten ersten Gehäuseabschnitt 3 ist eine Materialzuführung 25 in Form eines Trichters angeordnet, durch den aufzubereitendes Kunststoffmaterial bzw. zu entgasende Polymerschmelze in die Gehäusebohrungen 12, 13 einführbar ist. Die Polymerschmelze wird in einer Förderrichtung 26 von dem ersten Gehäuseabschnitt 3 bis zu dem letzten Gehäuseabschnitt 9 durch das Gehäuse 2 gefördert und verlässt die Schneckenmaschine 1 durch das Gehäuse 2 abschließende Düsenplatten 27, 28.

Die Schneckenmaschine 1 weist in Förderrichtung 26 hintereinander eine Einzugszone 29, eine erste Entgasungszone 30, eine zweite Entgasungszone 31 und eine Druckaufbauzone 32 auf. Auf den als Zahnwellen ausgebildeten Wellen 16, 17 sind in Förderrichtung 26 hintereinander jeweils einander paarweise zugeordnete erste Schneckenelemente 33, erste scheibenförmige Knetelemente 34, zweite Schneckenelemente 35, zweite scheibenförmige Knetelemente 36 und dritte Schneckenelemente 37 als Behandlungselemente angeordnet. Sowohl die Schneckenelemente 33, 35 und 37 als auch die Knetelemente 34 und 36, die benachbart auf den Wellen 16, 17 angeordnet sind, greifen ineinander, sind also paarweise dichtkämmend ausgebildet.

In den Entgasungszonen 30, 31 ist jeweils eine Entgasungsvorrichtung 38, 39 angeordnet, die zur Entgasung der in den Gehäusebohrungen 12, 13 befindlichen Polymerschmelze dienen. Die Entgasungsvorrichtungen 38, 39 weisen zugehörige plattenförmige Entgasungseinheiten 40, 41 auf, die zwischen den jeweils benachbarten Gehäuseabschnitten 5, 6 bzw. 7, 8 angeordnet und mit deren Flanschen 10, 11 verschraubt sind. Die Entgasungseinheiten 40, 41 erstrecken sich somit ausgehend von dem Gehäuse 2 bis zu den Wellen 16, 17 in den gesamten freien Bereich der Gehäusebohrungen 12, 13. Zum Entgasen der Polymerschmelze sind die Entgasungseinheiten 40, 41 derart ausgebildet, dass die Oberfläche der Polymerschmelze beim Fördern durch die jeweilige Entgasungseinheit 40, 41 vergrößert wird. Hierzu sind die Entgasungseinheiten 40, 41 als sogenannte Seiher-Platten ausgebildet, die eine Vielzahl von Schmelze-Durchgangsöffnungen 42 zum Durchführen und Aufteilen der Polymerschmelze aufweisen.

Die Schmelze-Durchgangsöffnungen 42 der Entgasungseinheiten 40, 41 sind um jeweilige Wellen-Durchgangsöffnungen 43, 44 angeordnet, durch die die Wellen 16, 17 geführt sind. Die Wellen-Durchgangsöffnungen 43, 44 sind dementsprechend konzentrisch zu den Drehachsen 19, 20 angeordnet und kreisförmig ausgebildet. Der Durchmesser der Wellen-Durchgangsöffnungen 43, 44 ist lediglich geringfügig größer als der Durchmesser der Wellen 16, 17.

Die Entgasungsvorrichtungen 38, 39 sind als Vorwärts-Entgasungen ausgebildet und weisen jeweils eine Entgasungsöffnung 45, 46 auf, die in dem in Förderrichtung 26 nachgeordneten Gehäuseabschnitt 6 bzw. 8 ausgebildet ist. Die Entgasungsvorrichtungen 38, 39 sind prinzipiell baugleich, wobei die Entgasungseinheiten 40, 41 in der Anzahl, in der Größe, in der Form und/oder in dem Abstand der jeweiligen Schmelze-Durchgangsöffnungen 42 variieren können. Da die Polymerschmelze mit zunehmender Entgasung zähflüssiger wird, können die Schmelze-Durchgangsöffnungen 42 der Entgasungseinheit 41 im Vergleich zu denen der Entgasungseinheit 40 insbesondere größer ausgebildet sein. Jede der Entgasungseinheiten 40, 41 weist jedoch vorzugsweise eine gleiche Anzahl pro Flächeneinheit von Schmelze-Durchgangsöffnungen 42 im Bereich zwischen den zwei Wellen 16, 17 und dem Gehäuse 2, also im freien Bereich der Gehäusebohrungen 12, 13 auf. Die Entgasungseinheiten 40, 41 sind einteilig ausgebildet.

Die Entgasungseinheiten 40, 41 sind jeweils zwischen Knetelementen 34 bzw. 36 und Schneckenelementen 35 bzw. 37 angeordnet, wobei die Knetelemente 34 bzw. 36 der jeweiligen Entgasungseinheit 40, 41 in der Förderrichtung 26 unmittelbar vorgeordnet und die Schneckenelemente 35 bzw. 37 unmittelbar nachgeordnet sind. Durch die Knetelemente 34 bzw. 36 wird die Oberfläche der Polymerschmelze vor der jeweiligen Entgasungseinheit 40, 41 ständig geändert. Durch die Schneckenelemente 35 bzw. 37 wird die Polymerschmelze nach der jeweiligen Entgasungseinheit 40, 41 zügig weitergefördert, sodass nach der \jeweiligen Entgasungseinheit 40, 41 ein ausreichender Freiraum entsteht und die flüchtigen Bestandteile ausdampfen und durch die Entgasungsöffnungen 45, 46 austreten können.

Die Montage der Schneckenmaschine 1 erfolgt derart, dass zunächst die Gehäuseabschnitte 3 bis 5 und die Wellen 16, 17 mit den darauf angeordneten Behandlungselementen 33, 34 montiert werden. Anschließend wird die Entgasungseinheit 40 mit den Wellen-Durchgangsöffnungen 43, 44 über die Enden der Wellen 16, 17 und entgegen der Förderrichtung 26 zu dem Gehäuseabschnitt 5 geschoben und an diesem befestigt. Anschließend werden die Gehäuseabschnitte 6 und 7 sowie die zugehörigen Behandlungselemente 35, 36 von den Enden der Wellen 16, 17 her montiert, wobei der Gehäuseabschnitt 6 mit der Entgasungseinheit 40 fest verbunden wird. Die Montage der Entgasungseinheit 41, der Gehäuseabschnitte 8, 9 und der Behandlungselemente 37 erfolgt in entsprechender Weise.

Die Schneckenmaschine 1 dient zur Entgasung von flüssigen Polymerschmelzen. Polymerschmelzen können sowohl Polymerlösungen als auch Polymersuspensionen sein. Die Polymerschmelzen werden der Schneckenmaschine 1 aus einem Polymerisationsreaktor zugeführt und enthalten einen hohen Anteil an unerwünschten niedermolekularen bzw. flüchtigen Bestandteilen, wie beispielsweise nicht umgesetzte Monomere, Oligomere, für die Polymerisation erforderliche Hilfsmittel, insbesondere Suspensionsmittel oder Lösungsmittel, und/oder Neben- bzw. Reaktionsprodukte.

Die Polymerschmelze wird der Schneckenmaschine 1 über die Materialzuführung 25 zugeführt und mittels der Schneckenelemente 33 und der Knetelemente 34 zu der Entgasungsvorrichtung 38 gefördert. Mittels der Knetelemente 34 wird die Oberfläche der Polymerschmelze kontinuierlich verändert. Der hieraus resultierende Energieverlust kann mittels der Knetelemente 34 wieder in die Polymerschmelze eingebracht werden. Aufgrund der Zwangsförderung wird die Polymerschmelze durch die Schmelze-Durchgangs-öffnungen 42 der Entgasungseinheit 40 gepresst, sodass der Polymerschmelzestrom in eine Vielzahl von kleineren Polymerschmelzeströmen aufgeteilt wird. In dem Freiraum nach der Entgasungseinheit 40 entstehen dementsprechend eine Vielzahl von Polymerschmelze-Strängen, die eine größere Oberfläche aufweisen als die Polymerschmelze vor dem Durchtritt durch die Entgasungseinheit 40. Aufgrund der geänderten und vergößerten Oberfläche können aus der Polymerschmelze niedermolekulare bzw. flüchtige Bestandteile austreten und über die Entgasungsöffnung 45 aus der Entgasungsvorrichtung 38 bzw. dem Gehäuse 2 entweichen. Die Viskosität der Polymerschmelze erhöht sich aufgrund der ausgetretenen Bestandteile. Die Polymerschmelze wird also zähflüssiger.

Die zähflüssigere Polymerschmelze wird mittels der Schneckenelemente 35 zu den Knetelementen 36 gefördert, die die Oberfläche der Polymerschmelze wiederum kontinuierlich verändern. Der hieraus resultierende Energieverlust kann mittels der Knetelemente 36 wieder in die Polymerschmelze eingebracht werden. Aufgrund der Zwangsförderung wird die Polymerschmelze durch die Schmelze-Durchgangsöffnungen 42 der Entgasungseinheit 41 gepresst, sodass entsprechend zu der Entgasungseinheit 40 die Oberfläche der Polymerschmelze verändert und vergrößert wird, wodurch weitere flüchtige Bestandteile aus der Polymerschmelze austreten und durch die Entgasungsöffnung 46 entweichen.

Durch die in das Verfahrensteil integrierten Entgasungsvorrichtungen 38, 39 bzw. Entgasungseinheiten 40, 41 wird eine erhebliche Verbesserung der Entgasungsleistung erzielt, wobei der zusätzliche Material- und Montageaufwand vergleichsweise gering ist.

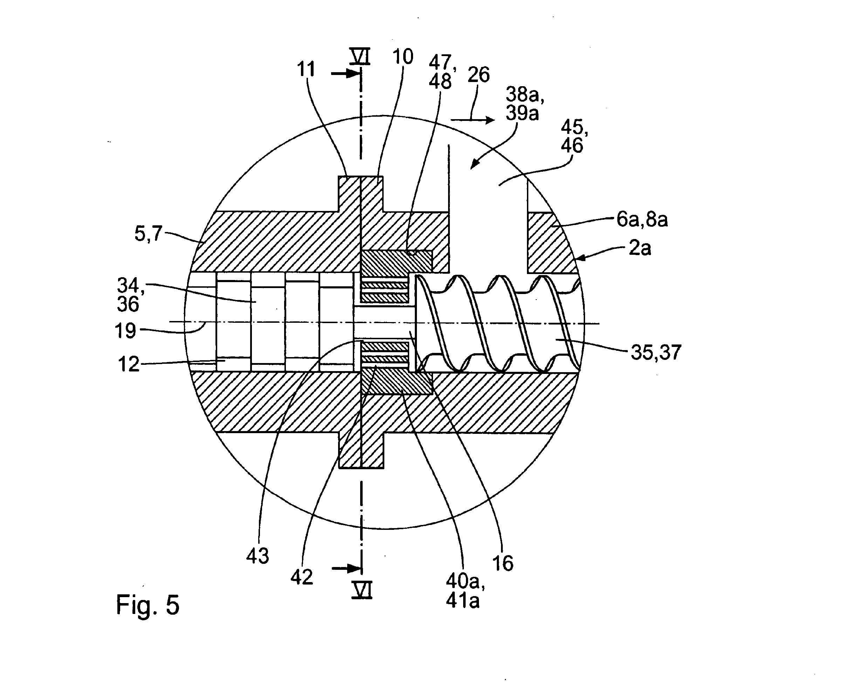

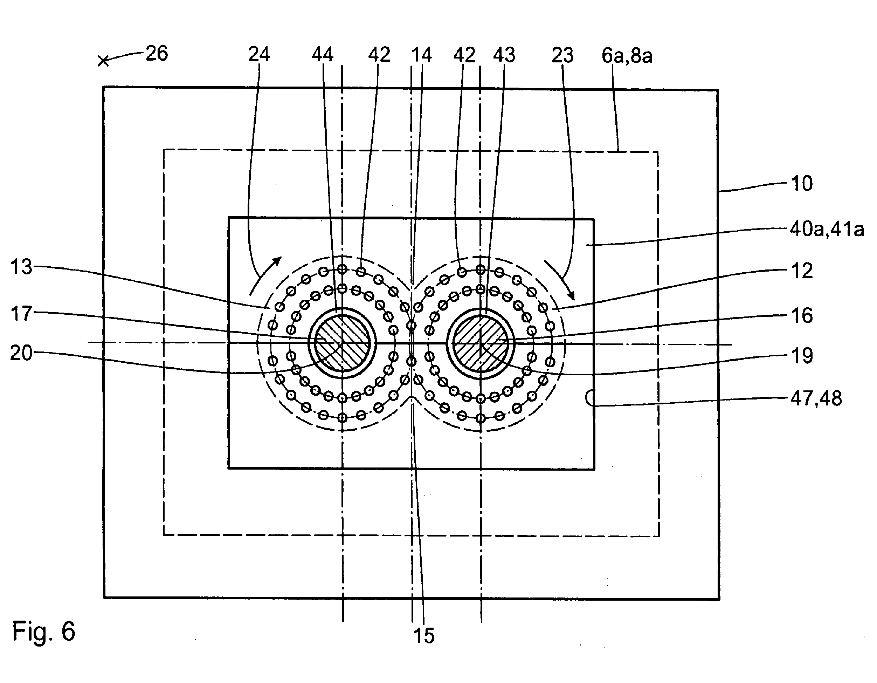

Nachfolgend wird unter Bezugnahme auf die Fig. 5 und 6 ein zweites Ausführungsbeispiel der Erfindung beschrieben. Konstruktiv identische Teile erhalten dieselben Bezugsziffern wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Im Unterschied zu dem ersten Ausführungsbeispiel sind die Entgasungseinheiten 40a, 41a der Entgasungsvorrichtungen 38a, 39a in die Gehäuseabschnitte 6a, 8a integriert. Hierzu weisen die Gehäuseabschnitte 6a, 8a an einer stromaufwärtigen Seite, also an einer den Gehäuseabschnitten 5, 7 zugewandten Seite, Ausnehmungen 47, 48 auf, in denen die Entgasungseinheiten 40a, 41a vollständig und endseitig bündig angeordnet sind. Die Gehäuseabschnitte 5 und 6a sowie 7 und 8a sind über die zugehörigen Flansche 10, 11 direkt miteinander verbunden. Aufgrund der integrierten Entgasungseinheiten 40a, 41 a vergrößert sich die Länge der Schneckenmaschine 1 in Richtung der Drehachsen 19, 20 nicht. Weiterhin können in den Gehäuseabschnitten 3 bis 9 in Richtung der Drehachsen 19, 20 verlaufende Bohrungen, beispielsweise Bohrungen zur Ausbildung von Kühlkanälen in üblicher Weise dicht miteinander verbunden werden. Eine Führung dieser Bohrungen durch die Entgasungseinheiten 40a, 41 a ist nicht erforderlich. Hinsichtlich der weiteren Montage und Funktionsweise wird auf das erste Ausführungsbeispiel verwiesen.

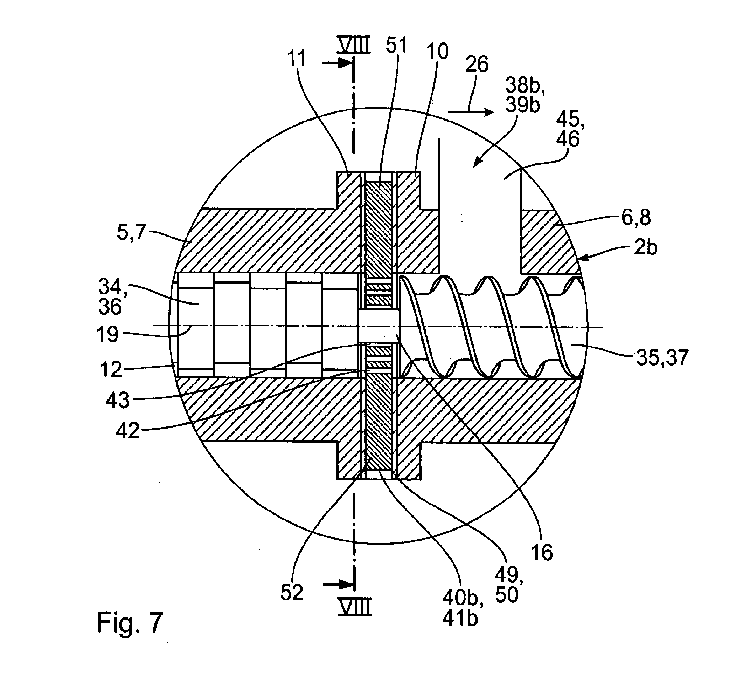

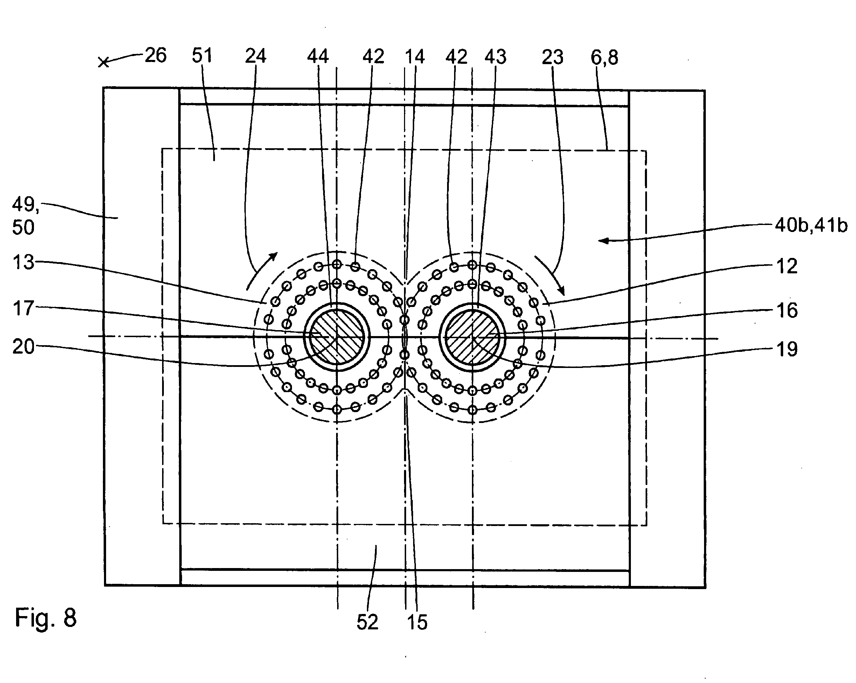

Nachfolgend wird unter Bezugnahme auf die Fig. 7 und 8 ein drittes Ausführungsbeispiel der Erfindung beschrieben. Konstruktiv identische Teile erhalten dieselben Bezugszeichen wie bei den vorangegangenen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b. Der wesentliche Unterschied zu den vorangegangenen Ausführungsbeispielen ist, dass die Entgasungseinheiten 40b, 41b der Entgasungsvorrichtungen 38b, 39b auswechselbar in einem jeweils zugehörigen Rahmen 49, 50 angeordnet sind. Die Rahmen 49, 50 sind zwischen den Gehäuseabschnitten 5 und 6 bzw. 7 und 8 angeordnet und über die zugehörigen Flansche 10, 11 fest mit diesen verbunden. Zum Auswechseln der Entgasungseinheiten 40b, 41b sind diese zweiteilig ausgebildet und hälftig in zwei baugleiche Entgasungseinheit-Teile 51, 52 unterteilt. Durch die Unterteilung sind die Wellen-Durchgangsöffnungen 43, 44 hälftig in den Entgasungseinheit-Teilen 51, 52 angeordnet. Die Montage der Rahmen 49, 50 erfolgt entsprechend der Montage der Entgasungseinheiten 40, 41 im ersten Ausführungsbeispiel. Die Entgasungseinheiten 40b, 41b bzw. deren Entgasungseinheit-Teile 51, 52 werden anschließend radial in die zugehörigen Rahmen 49, 50 eingeschoben und an diesen derart befestigt, dass die Entgasungseinheit-Teile 51, 52 für die Polymerschmelze dicht aneinanderliegen. In Abhängigkeit der zu entgasenden Polymerschmelze können unterschiedliche Entgasungseinheiten 40b, 41b zum Einsatz kommen, die in der Anzahl, in der Größe, in der Form und im Abstand der Schmelze-Durchgangsöffnungen 42 variieren können. Hinsichtlich der weiteren Montage und der weiteren Funktionsweise wird auf die vorangegangenen Ausführungsbeispiele verwiesen.

## Patentansprüche

1. Mehrwellen-Schneckenmaschine zur Entgasung von Polymerschmelzen mit
- einem mehrere Gehäuseabschnitte (3 bis 9; 3 bis 5, 6a, 7, 8a, 9) auf weisenden Gehäuse (2; 2a; 2b), in dem mindestens zwei zueinander parallele und einander durchdringende Gehäusebohrungen (12, 13) ausgebildet sind,
- mindestens zwei in den Gehäusebohrungen (12, 13) konzentrisch angeordneten und um zugehörige Drehachsen (19, 20) drehantreibbaren Wellen (16, 17),
- mehreren Behandlungselementen (33 bis 37) zur Behandlung einer Polymerschmelze, die in Richtung der jeweiligen Drehachse (19, 20) hintereinander auf den mindestens zwei Wellen (16, 17) drehfest angeordnet und miteinander dicht kämmend ausgebildet sind, und
- mehreren Entgasungsvorrichtungen (38, 39; 38a, 39a, 38b, 39b) zum Entgasen von in der Polymerschmelze enthaltenen flüchtigen Bestandteilen, wobei
-- die Entgasungsvorrichtungen (38, 39; 38a, 39a, 38b, 39b) in einer Förderrichtung (26) der Polymerschmelze hintereinander angeordnet sind und jeweils eine zugehörige Entgasungseinheit (40, 41; 40a, 41a; 40b, 41 b) und eine in einem der Gehäuseabschnitte (6, 8; 6a, 8a) ausgebildete Entgasungsöffnung (45, 46) aufweisen,
-- die jeweilige Entgasungseinheit (40, 41, 40a, 41a, 40b, 41b) plattenförmig ausgebildet ist und sich ausgehend von dem Gehäuse (2; 2a; 2b) bis zu den Wellen (16, 17) in den Gehäusebohrungen (12, 13) erstreckt,
-- die jeweilige Entgasungseinheit (40, 41; 40a, 41a; 40b, 41b) mindestens zwei Wellen-Durchgangsöffnungen (43, 44) zum Durchführen der mindestens zwei Wellen (16, 17) aufweist,
-- die jeweilige Entgasungseinheit (40, 41, 40a, 41a, 40b, 41b) eine Vielzahl von Schmelze-Durchgangsöffnungen (42) zum Durchführen der Polymerschmelze derart aufweist, dass die Oberfläche der Polymerschmelze an der jeweiligen Entgasungseinheit (40, 41; 40a, 41 a; 40b, 41 b) beim Durchführen vergrößert wird,
**dadurch gekennzeichnet,**
**dass** der jeweiligen Entgasungseinheit (40, 41; 40a, 41a; 40b, 41b) als Behandlungselemente in der Förderrichtung (26) scheibenförmige Knetelemente (34, 36) unmittelbar vorgeordnet und Schneckenelemente (35, 37) unmittelbar nachgeordnet sind.

2. Mehrwellen-Schneckenmaschine nach Anspruch 1, **dadurch gekennzeichnet, dass** die jeweilige Entgasungseinheit (40, 41; 40a, 41a; 40b, 41b) zwischen zwei Gehäuseabschnitten (5, 6, 7, 8; 5, 6a, 7, 8a) angeordnet ist.

3. Mehrwellen-Schneckenmaschine nach Anspruch 1 oder 2, **dadurch gekennzeichnet, dass** die Schmelze-Durchgangsöffnungen (42) im Bereich zwischen den mindestens zwei Wellen (16, 17) und dem Gehäuse (2; 2a; 2b) im Wesentlichen mit einer gleichen Anzahl pro Flächeneinheit angeordnet sind.

4. Mehrwellen-Schneckenmaschine nach einem der Ansprüche 1 bis 3, **dadurch gekennzeichnet, dass** die Entgasungsöffnung (45, 46) der zugehörigen Entgasungseinheit (40, 41; 40a, 41 a; 40b, 41b) in einer Förderrichtung (26) der Polymerschmelze nachgeordnet ist.

5. Mehrwellen-Schneckenmaschine nach einem der Ansprüche 1 bis 4, **dadurch gekennzeichnet, dass** die Entgasungsvorrichtungen (38, 39) gleichartig ausgebildet sind.

6. Mehrwellen-Schneckenmaschine nach einem der Ansprüche 1 bis 5, **dadurch gekennzeichnet, dass** die jeweilige Entgasungseinheit (40, 41) mit den benachbarten Gehäuseabschnitten (5, 6, 7, 8) fest verbunden ist.

7. Mehrwellen-Schneckenmaschine nach einem der Ansprüche 1 bis 6, **dadurch gekennzeichnet, dass** die jeweilige Entgasungseinheit (40a, 41a) in einer Ausnehmung (47, 48) eines Gehäuseabschnittes (6a, 8a) angeordnet ist, die insbesondere an einer stromaufwärtigen Seite des Gehäuseabschnittes (6a, 8a) ausgebildet ist.

8. Mehrwellen-Schneckenmaschine nach einem der Ansprüche 1 bis 7, **dadurch gekennzeichnet, dass** die jeweilige Entgasungseinheit (40, 41; 40a, 41a) einteilig ausgebildet ist.

9. Mehrwellen-Schneckenmaschine nach einem der Ansprüche 1 bis 8, **dadurch gekennzeichnet, dass** die jeweilige Entgasungseinheit (40b, 41b) mehrteilig ausgebildet ist und insbesondere derart zweiteilig ausgebildet ist, dass die Wellen-Durchgangsöffnungen (43, 44) jeweils hälftig in zwei Entgasungseinheit-Teilen (51, 52) angeordnet sind.

10. Mehrwellen-Schneckenmaschine nach Anspruch 9, **dadurch gekennzeichnet, dass** die jeweilige Entgasungseinheit (40b, 41b) auswechselbar in einem Rahmen (49, 50) angeordnet ist, der zwischen zwei Gehäuseabschnitten (5, 6, 7, 8) befestigt ist.

## Claims

1. Multi-shaft screw machine for devolatilizing polymer melts comprising
- a housing (2; 2a; 2b), which has a plurality of housing portions (3 to 9; 3 to 5, 6a, 7, 8a, 9) and in which at least two housing bores (12, 13), which are parallel to one another and penetrate one another, are formed,
- at least two shafts (16, 17), which are concentrically arranged in the housing bores (12, 13) and are rotatably drivable about associated rotational axes (19, 20),
- a plurality of treating elements (33 to 37) for treating a polymer melt, which are non-rotationally arranged one behind the other on the at least two shafts (16, 17) in the direction of the respective rotational axis (19, 20) and closely mesh with one another, and
- a plurality of devolatilization devices (38, 39; 38a, 39a, 38b, 39b) for devolatilizing volatile components contained in the polymer melt, wherein
-- the devolatilization devices (38, 39; 38a, 39a, 38b, 39b) are arranged one behind the other in a conveying direction (26) of the polymer melt and each have respective associated devolatilization units (40, 41; 40a, 41a; 40b, 41b) and a devolatilization opening (45, 46) formed in one of the housing portions (6, 8; 6a, 8a),
-- the respective devolatilization unit (40, 41; 40a, 41a; 40b, 41b) is configured plate-like and extends proceeding from the housing (2; 2a; 2b) to the shaft (16, 17) in the housing bores (12, 13) and
-- the respective devolatilization unit (40, 41; 40a, 41a; 40b, 41b) has at least two shaft through-openings (43, 44) for the at least two shafts (16, 17) to be guided through,
-- the respective devolatilization unit (40, 41; 40a, 41a; 40b, 41b) has a plurality of melt through-openings (42) for guiding the polymer melt through in such a way that the surface of the polymer melt on the respective devolatilization unit (40, 41; 40a, 41 a; 40b, 41b) is increased,
- **characterized in**
**that** disc-like kneading elements (34, 36) are arranged directly upstream and screw elements (35, 37) are arranged directly downstream of the respective devolatilization units (40, 41; 40a, 41a; 40b, 41b) as treating elements in a conveying direction (26).

2. Multi-shaft screw machine according to claim 1, **characterized in that** the respective devolatilization unit (40, 41; 40a, 41a; 40b, 41b) is arranged between two housing portions (5, 6, 7, 8; 5, 6a, 7, 8a).

3. Multi-shaft screw machine according to claim 1 or 2, **characterized in that** the melt through-openings (42) in the region between the at least two shafts (16, 17) and the housing (2; 2a; 2b) are substantially arranged with the same number per unit of area.

4. Multi-shaft screw machine according to any one of claims 1 to 3, **characterized in that** the devolatilization opening (45, 46) is arranged downstream of the associated devolatilization unit (40, 41; 40a, 41a; 40b, 41b) in a conveying direction (26) of the polymer melt.

5. Multi-shaft screw machine according to any one of claims 1 to 4, **characterized in that** the devolatilization devices (38, 39) are formed in the same manner.

6. Multi-shaft screw machine according to any one of claims 1 to 5, **characterized in that** the respective devolatilization unit (40, 41) is rigidly connected to the adjacent housing portions (5, 6, 7, 8).

7. Multi-shaft screw machine according to any one of claims 1 to 6, **characterized in that** the respective devolatilization unit (40a, 41a) is arranged in a recess (47, 48) of a housing portion (6a, 8a), which recess is formed, in particular, on an upstream side of the housing portion (6a, 8a).

8. Multi-shaft screw machine according to any one of claims 1 to 7, **characterized in that** the respective devolatilization unit (40, 41; 40a, 41a) has a single-part configuration.

9. Multi-shaft screw machine according to any one of claims 1 to 8, **characterized in that** the respective devolatilization unit (40b, 41b) has a multi-part configuration and, in particular, has a two-part configuration such that the shaft through-openings (43, 44) are in each case arranged in halves in two devolatilization unit parts (51, 52).

10. Multi-shaft screw machine according to claim 9, **characterized in that** the respective devolatilization unit (40b, 41b) is replaceably arranged in a frame (49, 50), which is fastened between two housing portions (5, 6, 7, 8).

## Revendications

1. Machine à vis multiples pour le dégazage de polymères fondus comprenant
- un carter (2 ; 2a ; 2b), présentant plusieurs parties de carter (3 à 9 ; 3 à 5, 6a, 7, 8a, 9), carter dans lequel sont formés au moins deux alésages de carter (12, 13), parallèles l'un à l'autre et traversant le carter,
- au moins deux arbres (16, 17), pouvant être entraînés en rotation autour d'axes de rotation correspondants (19, 20) et disposés de manière concentrique par rapport aux alésages de carter (12, 13),
- plusieurs éléments de traitement (33 à 37), qui sont disposés, en ne pouvant entrer en rotation, dans la direction des axes de rotation respectifs (16, 17) sur au moins deux arbres (16, 17), et qui sont conçus s'engrenant de manière étanche, pour le traitement d'un polymère fondu, et
- plusieurs dispositifs de dégazage (38, 39 ; 38a, 39a, 38b, 39b) pour le dégazage des composants volatils contenus dans les polymères fondus, où
-- les dispositifs de dégazage (38, 39 ; 38a, 39a, 38b, 39b) sont disposés les uns derrière les autres dans une direction de transfert (26) des polymères fondus et présentent chacun une unité de dégazage (40, 41 ; 40a, 41a ; 40b, 41b) et un orifice de dégazage (45, 46) formé dans l'une des parties du carter (6, 8 ; 6a, 8a),
-- l'unité de dégazage respective (40, 41, 40a, 41a, 40b, 41b) est conçue sous la forme d'un plateau et s'étend en partant du carter (2 ; 2a ; 2b) jusqu'aux arbres (16, 17) dans les alésages du carter (12, 13),
-- l'unité de dégazage respective (40, 41 ; 40a, 41a ; 40b, 41b) présente au moins deux orifices de passage d'arbre (43, 44) pour le passage des au moins deux arbres (16, 17),
-- l'unité de dégazage respective (40, 41, 40a, 41a, 40b, 41b) présente une multitude d'orifices de passage (42) pour le produit fondu afin d'assurer le passage des polymères fondus, de sorte que la surface des polymères fondus est augmentée lors du passage dans l'unité de dégazage respective (40, 41 ; 40a, 41a ; 40b, 41b),
**caractérisée en ce**
**que** des éléments de pétrissage (34, 36), en forme de disques, sont disposés tout près en amont de l'unité de dégazage respective (40, 41 ; 40a, 41a ; 40b, 41b), et des éléments en forme de vis (35, 37) sont disposés tout juste en aval, servant d'éléments de traitement dans la direction de transfert (26).

2. Machine à vis multiples selon la revendication 1 **caractérisée en ce que** l'unité de dégazage respective (40, 41 ; 40a, 41a ; 40b, 41b) est disposée entre deux parties de carter (5, 6, 7, 8 ; 5, 6a, 7, 8a).

3. Machine à vis multiples selon les revendications 1 ou 2 **caractérisée en ce que** les orifices de passage du produit fondu (42) sont disposés dans la zone entre au moins les deux arbres (16, 17) et le carter (2 ; 2a ; 2b), à un nombre, dans l'ensemble, égal par unité de surface.

4. Machine à vis multiples selon l'une des revendications de 1 à 3 **caractérisée en ce que** l'orifice de dégazage (45, 46) de l'unité de dégazage (40, 41 ; 40a, 41a ; 40b, 41b) correspondante est disposé en aval dans une direction de transfert (26) des polymères fondus.

5. Machine à vis multiples selon l'une des revendications de 1 à 4 **caractérisée en ce que** les dispositifs de dégazage (38, 39) sont conçus de la même manière.

6. Machine à vis multiples selon l'une des revendications de 1 à 5 **caractérisée en ce que** l'unité de dégazage (40, 41) respective est solidement reliée avec les parties de carter (5, 6, 7, 8) voisines.

7. Machine à vis multiples selon l'une des revendications de 1 à 6 **caractérisée en ce que** l'unité de dégazage respective (40a, 41a) est disposée dans une cavité (47, 48) d'une partie de carter (6a, 8a), qui, en particulier, est établie sur un côté amont de la partie de carter (6a, 8a).

8. Machine à vis multiples selon l'une des revendications de 1 à 7 **caractérisée en ce que** l'unité de dégazage (40, 41) respective est conçue en une pièce.

9. Machine à vis multiples selon l'une des revendications de 1 à 8 **caractérisée en ce que** l'unité de dégazage respective (40b, 41b) est conçue en plusieurs parties et en particulier est conçue en deux parties, de sorte que les orifices de passages des arbres (43, 44) sont chacun disposés par moitié dans deux parties d'unité de dégazage (51, 52).

10. Machine à vis multiples selon la revendication 9 **caractérisée en ce que** l'unité de dégazage respective (40b, 41b) est disposée, en pouvant être échangée, dans un cadre (49, 50) qui est fixé entre deux parties de carter (5, 6, 7, 8).
